# EUROPÄISCHE PATENTANMELDUNG

(11) **EP 4 803 798 A1**
(43) Veröffentlichungstag der Anmeldung: **09.09.2026**
(21) Anmeldenummer: 26160815.2
(22) Anmeldetag: 26.02.2026
(51) Int. Cl.: F16P 3/14, G01V 8/20

(54) **MOBILER SICHERHEITSSTÄNDER FÜR EINE MOBILE SICHERHEITS-LICHTSCHRANKE UND VERFAHREN ZUR INITIALISIERUNG EINER MOBILEN SICHERHEITS-LICHTSCHRANKE**

(30) Priorität: 07.03.2025 DE 102025108649
(71) Anmelder: Baubot GmbH, 1100 Wien (AT)
(72) Erfinder: Frühwirth, Georg, 1030 Wien (AT); Lang, Patrick, 1140 Wien (AT); Senoner, Damian, 1100 Wien (AT); Rodionov, Victor, 1040 Wien (AT)
(74) Vertreter: Suchy, Ulrich Johannes

(57) **Zusammenfassung**

Die Erfindung betrifft einen mobilen Sicherheitsständer (1) für eine mobile Sicherheits-Lichtschranke (2), aufweisend eine Basis (3) mit mindestens einem Rad (4) zum Bewegen des mobilen Sicherheitsständers (1) auf einer Fläche, ein an der Basis (3) angebrachtes Trägergestell (5), eine zum Aussenden elektromagnetischer Strahlung ausgebildete Emittereinheit (6), wobei die Emittereinheit (6) an dem Trägergestell (5) angeordnet ist, und/oder eine zum Empfangen elektromagnetischer Strahlung ausgebildete Empfängereinheit (7), wobei die Empfängereinheit (7) am Trägergestell (5) angeordnet ist, sowie ein Steuermodul (8) zur Steuerung des mobilen Sicherheitsständers (1) mit einer Aktivierungssteuerung (9) zur Aktivierung einer Überwachung des mobilen Sicherheitsständers (1) und ein Kommunikationsmodul (10), das zum Empfangen von Daten von dem Steuermodul (8) und zum Übertragen der Daten ausgebildet ist.

## Beschreibung

Die Anmeldung betrifft einen mobilen Sicherheitsständer für eine mobile Sicherheits-Lichtschranke, ein mobiles Sicherheits-Lichtschranken-System, ein mobiles Bausystem und ein Verfahren zum Betrieb des mobilen Bausystems.

Sicherheits-Lichtschranken werden häufig in Produktionsstätten eingesetzt, um den Zugang zu zugangsbeschränkten Bereichen zu überwachen, in denen beispielsweise ein Sicherheitsrisiko für Arbeiter besteht. Solche Sicherheitslichtschranken bestehen in der Regel aus einer Lichtquelle und einem Detektor, der Licht von der Lichtquelle empfängt. Wenn eine Person oder ein Gegenstand den optischen Pfad zwischen der Lichtquelle und dem Detektor versperrt, nimmt die Lichtintensität am Detektor plötzlich ab, was eine Verletzung des zugangsbeschränkten Bereichs anzeigt. Ein dadurch ausgelöstes Signal kann dazu verwendet werden, einen Alarm auszulösen oder eine Maschine anzuhalten, die ein Sicherheitsrisiko für das Personal im zugangsbeschränkten Bereich darstellt. Solche Lichtschranken werden in der Regel in Innenräumen an festen Standorten installiert.

Ein System zur Vermeidung von Kollisionen zwischen einem Roboter und Hindernissen ist zum Beispiel aus der US 5 280 622 A bekannt.

Vor allem im Bauwesen werden Sicherheitszäune häufig eingesetzt, um den Zugang zu gefährlichen Bereichen zu begrenzen und Unfälle zu vermeiden. In der Regel werden Metallgitterzäune verwendet, um physische Barrieren zu schaffen. Ein Nachteil solcher Metallzäune ist, dass sie schwer und unflexibel sind und Beschädigungen nicht erkennen können. Alternativ können auch mobile Sicherheits-Lichtschranken verwendet werden. Diese mobilen Lichtschranken bestehen in der Regel aus Lichtquellen und Detektoren, die paarweise an Pfosten befestigt sind. Durch entsprechendes Aufstellen der Pfosten auf der Baustelle kann ein mobiler virtueller Zaun erzeugt werden.

Ein optoelektronischer virtueller Sicherheitszaun, der aus Pfosten mit Emittern und Empfängern besteht, ist zum Beispiel aus der US 5 198 799 A bekannt.

Der zunehmende Einsatz mobiler Bauroboter, die autonom Aufgaben wie Bohren oder das Setzen von Ankern übernehmen, führt zu neuen Sicherheitsanforderungen auf Baustellen. Mobile Bauroboter werden zunehmend eingesetzt, um sich wiederholende und körperlich anspruchsvolle Aufgaben auf Baustellen zu automatisieren. Ein mobiler Bauroboter kann zum Beispiel Löcher an vordefinierten Positionen bohren oder Anker montieren. Solche mobilen Bauroboter sind so konfiguriert, dass sie sich autonom auf der Baustelle bewegen, vordefinierte Positionen ansteuern, an denen eine bestimmte Aufgabe ausgeführt werden soll, und die entsprechende Aufgabe dann ausführen. Mit Hilfe eines solchen mobilen Roboters können die Arbeitskräfte effizienter eingesetzt und die Bauarbeiten beschleunigt werden. Typischerweise bestehen solche mobilen Roboter aus einer Basis, einem Antriebssystem zum Bewegen des Roboters sowie einem Endeffektor. Der Endeffektor kann an einem Roboterarm angebracht sein. Solche mobilen Bauroboter können ein erhebliches Sicherheitsrisiko für Bauarbeiter in der Nähe des Roboters darstellen.

WO 2022 154 731 A1 offenbart beispielsweise ein System zur Bearbeitung von Betonoberflächen, das eine mobile Anordnung zur Zugangskontrolle und eine Maschine zur autonomen oder ferngesteuerten Bearbeitung von Betonoberflächen umfasst. Die mobile Zugangskontrollanordnung umfasst eine Zugangskontrolleinheit, die mit einer oder mehreren Lichtschrankenvorrichtungen verbunden ist, die so angeordnet sind, dass sie einen zugangsbeschränkten Bereich der Betonoberfläche abgrenzen.

Insbesondere auf Baustellen und auch im Zusammenhang mit der Automatisierung von Baustellen müssen solche Schutzzäune häufig bewegt, aufgestellt, ausgerichtet und gestartet werden. Gerade wegen dieser häufigen Veränderungen und der Dynamik von Baustellen ist es entscheidend, dass der Aufbau der Sicherheitslichtschranke korrekt erfolgt. Insbesondere das Initialisieren der Sicherheits-Lichtschranke ist entscheidend und fehleranfällig, da beispielsweise Personen, die sich während des Initialisierens im (künftigen) zugangsbeschränkten Bereich aufhalten, von der Sicherheits-Lichtschranke nicht erkannt werden, da die Begrenzung des zugangsbeschränkten Bereichs nicht durchbrochen wird. Die derzeit verfügbaren und bekannten Sicherheits-Lichtschranken sind anfällig für Initialisierungsfehler, die ein Sicherheitsproblem verursachen können.

Es ist daher Aufgabe der vorliegenden Erfindung, einen mobilen Sicherheitsständer für eine mobile Sicherheits-Lichtschranke und ein Verfahren zur Initialisierung einer mobilen Sicherheits-Lichtschranke bereitzustellen, die die oben genannten Nachteile mildern oder beseitigen. Insbesondere ist es ein Ziel der vorliegenden Erfindung, einen mobilen Sicherheitsständer für ein Initialisierungsverfahren für eine mobile Sicherheits-Lichtschranke zur Verfügung zu stellen, um eine mobile Sicherheits-Lichtschranke mit erhöhter Sicherheit, insbesondere auf Baustellen, zu initialisieren.

Diese Aufgabe wird gelöst durch einen mobilen Sicherheitsständer für eine mobile Sicherheits-Lichtschranke aufweisend:
- eine Basis mit mindestens einem Rad zum Bewegen des mobilen Sicherheitsständers auf einer Fläche;
- ein Trägergestell, das an der Basis befestigt ist;
- eine Emittereinheit, insbesondere mit einem Laserstrahler, die zum Aussenden von elektromagnetischer Strahlung ausgebildet ist, wobei die Emittereinheit an dem Trägergestell angeordnet ist, wobei die Emittereinheit vorzugsweise gegenüber dem Trägergestell verschwenkbar ist; und/oder
- eine Empfängereinheit, die zum Empfangen elektromagnetischer Strahlung konfiguriert ist, wobei die Empfängereinheit an dem Trägergestell angeordnet ist, wobei die Empfängereinheit vorzugsweise in Bezug auf das Trägergestell schwenkbar ist;
- ein Steuermodul zur Steuerung des mobilen Sicherheitsständers mit einer Aktivierungssteuerung, vorzugsweise mit einem Aktivierungsknopf, zur Aktivierung einer Überwachung durch den mobilen Sicherheitsständer; und
- ein Kommunikationsmodul zum Empfangen von Daten von dem Steuermodul und zum Emittieren der Daten.

Die Aufgabe wird ferner gelöst durch ein mobiles Sicherheits-Lichtschranken-System mit mindestens einem ersten mobilen Sicherheitsständer und mindestens einem zweiten mobilen Sicherheitsständer, wobei der erste und der zweite mobile Sicherheitsständer erfindungsgemäße mobile Sicherheitsständer sind, wobei die Emittereinheit des ersten mobilen Sicherheitsständers und die Empfängereinheit des zweiten mobilen Sicherheitsständers so ausgerichtet sind, dass die Empfängereinheit zum Empfang elektromagnetischer Strahlung von der Emittereinheit ausgebildet ist, wobei die Emittereinheit und die Empfängereinheit eine mobile Sicherheits-Lichtschranke bilden.

Die Aufgabe wird ferner gelöst durch ein Verfahren zur Initialisierung einer mobilen Sicherheits-Lichtschranke mit einem mobilen Sicherheits-Lichtschranken-System gemäß der Erfindung mit den Schritten:
- Aufstellen des ersten mobilen Sicherheitsständers und des mindestens zweiten mobilen Sicherheitsständers, vorzugsweise auf einer Baustelle;
- Ausrichten der Emittereinheit des ersten mobilen Sicherheitsständers und der Empfängereinheit des zweiten mobilen Sicherheitsständers, so dass die Empfängereinheit so konfiguriert ist, dass sie elektromagnetische Strahlung von der Emittereinheit empfängt;
- Aktivieren der Überwachung durch das mobile Sicherheits-Lichtschranken-System durch Bestätigen eines anfänglichen sicheren Zustands unter Verwendung der Aktivierungssteuerung des ersten mobilen Sicherheitsständers und unter Verwendung der Aktivierungssteuerung des mindestens zweiten mobilen Sicherheitsständers.

Der mobile Sicherheitsständer für die mobile Sicherheits-Lichtschranke weist eine Basis mit mindestens einem Rad zum Bewegen des mobilen Sicherheitsständers auf einer Fläche auf. Die Fläche kann die Bodenoberfläche einer Baustelle sein, z. B. die Bodenoberfläche eines Tunnels oder eines Gebäudes. Die Basis kann z. B. ein Fahrgestell für das mindestens eine Rad aufweisen. Die Basis kann ein Rechteck oder einen Querschnitt aufweisen.

Ein Trägergestell ist an der Basis befestigt. Das Trägergestell kann insbesondere ein strukturelles Gerüst, z. B. aus einer oder mehreren Stützstangen, aufweisen. Die Stützstangen können insbesondere aus einem leichten und steifen Material bestehen, vorzugsweise bestehen die Stützstangen aus Aluminium. Das Trägergestell kann insbesondere mindestens ein längliches Element aufweisen, das bei bestimmungsgemäßem Gebrauch im Wesentlichen vertikal angeordnet sein kann.

Das mobile Sicherheits-Lichtschranken-System besteht aus einer Emittereinheit und/oder einer Empfängereinheit. Die Emittereinheit ist auf dem Trägergestell angeordnet. Die Emittereinheit kann z.B. aus einem Laserstrahler oder einer LED bestehen. Die Emittereinheit kann insbesondere aus mindestens zwei, vorzugsweise sechs, Emittern bestehen. Die Emitter können insbesondere an einem länglichen Teil der Emittereinheit angeordnet sein. Die Emittereinheit ist so konfiguriert, dass sie elektromagnetische Strahlung aussendet, z. B. mit einer Wellenlänge im sichtbaren Spektrum (VIS) oder im Infrarotbereich (IR). Die Emittereinheit kann insbesondere an dem Trägergestell befestigt werden. Die emittierte elektromagnetische Strahlung kann im Wesentlichen kollimiert sein. Die Emittereinheit kann insbesondere von dem Trägergestell abnehmbar sein. Die Emittereinheit ist vorzugsweise in Bezug auf das Trägergestell schwenkbar, um die Ausrichtung der Emittereinheit zu erleichtern, z. B. in Bezug auf eine Empfängereinheit eines anderen mobilen Sicherheitsständers.

Zusätzlich oder alternativ zur Emittereinheit kann auf dem Trägergestell eine Empfängereinheit zum Empfang elektromagnetischer Strahlung angeordnet sein. Die Empfängereinheit kann z. B. einen Fotodetektor aufweisen. Die Empfängereinheit kann insbesondere aus mindestens zwei Empfängern, insbesondere Fotodetektoren, bestehen. Die Empfängereinheit kann insbesondere mindestens zwei, vorzugsweise sechs, Empfänger aufweisen. Die Empfänger können insbesondere an einem langgestreckten Teil der Empfängereinheit angeordnet sein. Die Empfängereinheit kann insbesondere an dem Trägergestell befestigt sein. Die Empfängereinheit kann insbesondere von dem Trägergestell abnehmbar sein. Die Empfängereinheit ist vorzugsweise in Bezug auf das Trägergestell schwenkbar.

Weiterhin weist der mobile Sicherheitsständer ein Steuermodul zur Steuerung des mobilen Sicherheitsständers auf. Das Steuermodul weist eine Aktivierungssteuerung, vorzugsweise mit einem Aktivierungsknopf, zur Aktivierung einer Überwachung des mobilen Sicherheitsständers auf. Diese Aktivierungssteuerung bietet einen entscheidenden Vorteil, um den korrekten Aufbau einer mobilen Sicherheits-Lichtschranke auf Basis von mindestens zwei mobilen Sicherheitsständern zu gewährleisten. Bevor die Daten der aufgestellten bzw. ausgerichteten mobilen Sicherheitsständer zur Überwachung eines zugangsbeschränkten Bereichs genutzt werden können, muss die Aktivierungssteuerung jedes mobilen Sicherheitsständers von einem Bediener betätigt werden. Vor Beginn der Überwachung ist der Bediener daher gezwungen, sich zu jedem beteiligten mobilen Sicherheitsständer zu begeben und die jeweilige Aktivierungssteuerung zu betätigen, z.B. durch Drücken des Aktivierungsknopfes. Dadurch ist der Bediener in der Lage, den zugangsbeschränkten Bereich zumindest aus der Perspektive der beteiligten mobilen Sicherheitsständer zu überprüfen. Diese abschließende Kontrolle stellt sicher, dass der Ausgangszustand des zugangsbeschränkten Bereichs sicher ist und die Überwachung auf der Basis dieses sicheren Ausgangszustands beginnt. Die Aktivierungssteuerung hilft, diese Endkontrolle durchzusetzen, führt zu einer zuverlässigeren Überwachung und hilft, Unfälle zu vermeiden.

Darüber hinaus weist der mobile Sicherheitsständer ein Kommunikationsmodul auf, das für den Empfang von Daten vom Steuermodul und für die Übertragung der Daten konfiguriert ist. Die Daten können z.B. einen Hinweis auf eine Unterbrechung der Lichtschranke, d.h. einen plötzlichen Abfall eines Signals der Empfängereinheit, aufweisen. Die Daten können z.B. ein Statussignal des Emitters enthalten. Wird die Aktivierungssteuerung betätigt, können die Daten z.B. ein Aktivierungssignal enthalten. Die Daten können z.B. an eine externe Verarbeitungseinheit, z.B. einen Personalcomputer eines Bauleiters, übertragen werden. Die Daten können insbesondere von einem Menschen und/oder mit Hilfe einer automatisierten Software überwacht und analysiert werden (aus der Ferne). Das Kommunikationsmodul kann z.B. ein Bluetooth-Modul, ein GSM-Modul oder ein WiFi-Modul sein.

Der mobile Sicherheitsständer kann insbesondere einen bildgebenden und/oder einen Näherungssensor aufweisen. Der Bildgebungs- und/oder Näherungssensor kann insbesondere auf dem Trägergestell angeordnet sein und ist in Bezug auf das Trägergestell schwenkbar. Der Bildgebungs- und/oder Näherungssensor kann insbesondere eine zusätzliche Überwachung des zugangsbeschränkten Bereichs, den die mobile Sicherheits-Lichtschranke abgrenzen soll, ermöglichen. Die Lichtschranke liefert ein Signal, das eine Verletzung des zugangsbeschränkten Bereichs anzeigt. Der zugangsbeschränkte Bereich (d.h. der Bereich innerhalb der durch einen oder mehrere Lichtvorhänge und weitere optionale Barrieren definierten Grenzen) wird jedoch nicht durch die mobile Sicherheits-Lichtschranke überwacht, sondern nur die Grenzen des zugangsbeschränkten Bereichs. Mit Hilfe des Bildgebungs- und/oder Näherungssensors kann der Bereich selbst zusätzlich zu seiner Begrenzung überwacht werden. Der Bildgebungs- und/oder Näherungssensor kann insbesondere eine Kamera, ein Radarsensor oder ein Lidarsensor sein. Die Kamera kann z.B. eine Stereokamera sein. Der Bildgebungs- und/oder Annäherungssensor kann insbesondere so ausgerichtet werden, dass der zugangsbeschränkte Bereich überwacht wird. Der bildgebende und/oder der Näherungssensor können die Umgehung von Sicherheitsprotokollen verhindern, da die Überwachung durch den bildgebenden und/oder den Näherungssensor ein zusätzliches Sicherheitsmerkmal neben einer Lichtschranke darstellt. Die Daten können insbesondere ein Signal des bildgebenden Sensors und/oder des Näherungssensors aufweisen. Das Signal des Bildgebungs- und/oder Näherungssensors kann insbesondere (aus der Ferne) von einem Menschen und/oder mit Hilfe einer automatisierten Software analysiert werden, z. B. mit Hilfe von Bilderkennung.

Optional kann der mobile Sicherheitsständer mindestens zwei Emittereinheiten aufweisen, wobei die mindestens zwei Emittereinheiten separat und unabhängig voneinander schwenkbar sind.

Optional kann der mobile Sicherheitsständer mindestens zwei Empfängereinheiten aufweisen, wobei die mindestens zwei Empfängereinheiten separat und unabhängig voneinander schwenkbar sind.

Optional ist die Empfängereinheit und/oder die Emittereinheit in Bezug auf das Trägergestell beweglich. Vorzugsweise sind die Empfängereinheit und die Emittereinheit getrennt voneinander beweglich, so dass beide unabhängig voneinander ausgerichtet werden können. Insbesondere auf Baustellen können beim Einsatz einer mobilen Sicherheits-Lichtschranke Unebenheiten, Höhenunterschiede und verschiedene Hindernisse auftreten, die berücksichtigt und ausgeglichen werden müssen. Daher ist ein hohes Maß an Flexibilität des mobilen Sicherheitsständers von entscheidender Bedeutung.

Der mobile Sicherheitsständer kann insbesondere drei Stützelemente zur Abstützung des mobilen Sicherheitsständers auf dem Untergrund aufweisen, wobei die Stützelemente ausziehbar sind. Die Stützelemente können z.B. an der Basis befestigt sein. Die Stützelemente können insbesondere in einer eingefahrenen Position einfahrbar sein, wobei das mindestens eine Rad in der eingefahrenen Position der Stützelemente mit der Oberfläche in Kontakt sein kann. Die Stützelemente können insbesondere in eine ausgefahrene Position ausgefahren werden, wobei das mindestens eine Rad in der ausgefahrenen Position der Stützelemente nicht in Kontakt mit der Oberfläche sein darf. Die Verlängerung der Stützelemente kann insbesondere individuell eingestellt werden, um den mobilen Sicherheitsständer auszurichten.

Das Trägergestell kann insbesondere mindestens einen, vorzugsweise zwei Griffe zum Halten oder Aufnehmen des mobilen Sicherheitsständers aufweisen.

Optional kann der mobile Sicherheitsständer eine Batterie aufweisen, die für die Bereitstellung von elektrischer Energie konfiguriert ist. Insbesondere kann die Batterie für die Versorgung der Emittereinheit, der Empfängereinheit, des Steuermoduls und/oder des Kommunikationsmoduls konfiguriert sein. Die Batterie kann insbesondere auf oder in dem Trägergestell angeordnet sein. Vorzugsweise kann die Batterie an oder in der Basis angeordnet sein, um ein Gegengewicht zu bilden und den mobilen Sicherheitsständer zu stabilisieren.

Optional kann der mobile Sicherheitsständer eine zweite Batterie aufweisen, die für die Bereitstellung von elektrischer Energie ausgelegt ist. Die beiden Batterien können insbesondere abnehmbar am Trägergestell oder an der Basis befestigt sein, so dass jede Batterie unabhängig von der anderen Batterie abgenommen werden kann. Wenn beispielsweise eine Batterie leer ist, kann sie entfernt und durch eine (andere) geladene Batterie ersetzt werden. Während des Austauschs kann die zweite Batterie Strom liefern, so dass der Austausch nicht zu einer Unterbrechung der mobilen Sicherheits-Lichtschranke führt.

Optional kann der mobile Sicherheitsständer ein Solarpanel zur Stromversorgung, insbesondere zum Aufladen der Batterie, aufweisen.

Der mobile Sicherheitsständer kann eine optische Markierung, insbesondere ein Prisma, zur Verfolgung mit einem Tachymeter aufweisen, wobei die optische Markierung auf dem Trägergestell angeordnet ist. Insbesondere auf Baustellen ist die exakte Position von Elementen entscheidend für die Einhaltung von Bauvorschriften und aus Sicherheitsgründen. Mittels einer optischen Markierung kann der mobile Sicherheitsständer mit einem Tachymeter verfolgt werden.

Optional kann der mobile Sicherheitsständer ein Tachymeter zur Verfolgung einer optischen Markierung aufweisen, wobei das Tachymeter auf dem Trägergestell angeordnet ist. Bei dem Tachymeter kann es sich insbesondere um eine Laser-Totalstation handeln. Das Tachymeter kann so konfiguriert sein, dass es Elemente auf der Baustelle verfolgt, z. B. mobile Maschinen, wie einen mobilen (Bau-)Roboter.

Der mobile Sicherheitsständer kann insbesondere ein Audiosignalsystem aufweisen, das so konfiguriert ist, dass es ein Audiosignal abgibt. Das Audiosignalsystem kann insbesondere so konfiguriert sein, dass es einen Alarm ausgibt, wenn z. B. eine Lichtschranke durchbrochen wird. Das Audiosignalsystem kann insbesondere so konfiguriert sein, dass es während des (regulären) Betriebs einen Warnton abgibt.

Optional weist der mobile Sicherheitsständer mindestens einen Warnhinweis, beispielsweise ein Warnschild, auf, wobei der mindestens eine Warnhinweis lösbar an dem Trägergestell befestigt ist. Bei solchen Warnhinweisen kann es sich vorzugsweise um passive, d. h. stromlose Elemente handeln, die ausfallsicher auf eine mögliche Gefahr hinweisen. Je nach Situation kann eine Anpassung des Warnhinweises erforderlich sein. Daher kann es erforderlich sein, die Warnhinweise regelmäßig auszutauschen. Das Trägergestell kann insbesondere Befestigungselemente zur Befestigung von Warnhinweisen aufweisen. Das Trägergestell insbesondere kann eine Aufnahme für einen Warnhinweis aufweisen. Das Trägergestell kann insbesondere einen Klickverschluss zum Anbringen des mindestens einen Warnhinweises aufweisen. Der Warnhinweis kann insbesondere in Bezug auf das Trägergestell schwenkbar sein, um eine Ausrichtung des Warnhinweises einzustellen, z. B., um die Sichtbarkeit des Warnhinweises auf einer Baustelle zu verbessern.

Vorzugsweise weist das Steuermodul eine Kopplungssteuerung, vorzugsweise einen Kopplungsknopf, zur Verbindung der Emittereinheit mit einer Empfängereinheit eines anderen mobilen Sicherheitsständers auf.

Die Steuereinheit kann z. B. so konfiguriert sein, dass sie die Emittereinheit als Reaktion auf eine Betätigung der Kopplungssteuerung (durch einen Bediener) ausschaltet, eine vordefinierte Zeitspanne wartet und sie dann wieder einschaltet. Die Daten können eine Angabe darüber enthalten, wann die Kopplungssteuerung betätigt wird. Wenn mehrere (z. B. mindestens drei) mobile Sicherheitsständer eine Lichtschranke bilden, können insbesondere die Kommunikationsmodule der mobilen Sicherheitsständer so konfiguriert sein, dass sie miteinander kommunizieren. Zum Beispiel kann die Kopplungssteuerung eines ersten mobilen Sicherheitsständers betätigt werden, woraufhin die Emittereinheit ausgeschaltet wird. Die Empfängereinheit eines zweiten mobilen Sicherheitsständers, die auf die Emittereinheit des ersten mobilen Sicherheitsständers ausgerichtet ist, empfängt keine elektromagnetische Strahlung von der Emittereinheit, da diese ausgeschaltet ist. Nach einer vordefinierten Zeitspanne, z. B. mindestens 1 ms oder mindestens eine Sekunde, wird die Emittereinheit des ersten mobilen Sicherheitsständers wieder eingeschaltet, so dass die Empfängereinheit des zweiten mobilen Sicherheitsständers elektromagnetische Strahlung von der Emittereinheit des ersten mobilen Sicherheitsständers empfängt. Das Kommunikationsmodul des ersten mobilen Sicherheitsständers kann insbesondere Daten, die einen Zeitstempel der Kopplungssteuerung aufweisen, an den zweiten mobilen Sicherheitsständer übertragen. Der zweite mobile Sicherheitsständer kann insbesondere so konfiguriert sein, dass er den empfangenen Zeitstempel mit einem erkannten Signal der Empfängereinheit vergleicht. Wenn das Signal der Empfängereinheit mit dem Zeitstempel übereinstimmt, kann das Steuermodul des zweiten mobilen Sicherheitsständers bestätigen, dass die Emittereinheit des ersten mobilen Sicherheitsständers und die Empfängereinheit des zweiten mobilen Sicherheitsständers gepaart sind und eine Lichtschranke bilden. Die Position des ersten und des zweiten mobilen Sicherheitsständers kann bekannt sein. Daher kann insbesondere die Position, Ausrichtung und/oder Länge dieser Lichtschranke/n bekannt sein.

Folglich können die Daten nicht nur einen Hinweis auf eine Verletzung der Begrenzung des zugangsbeschränkten Bereichs enthalten, sondern auch einen Hinweis darauf, wo, d. h. zwischen welchen mobilen Sicherheitsständern, die Verletzung stattgefunden hat. Diese Informationen können zum Beispiel dazu dienen, eine geeignete Reaktion auf die Verletzung zu bestimmen.

Vorzugsweise kann das Steuermodul eine Not-Aus-Taste zum Auslösen eines Alarms aufweisen, wobei die Daten den Alarm beinhalten. Erkennt beispielsweise ein Bediener oder ein Bauarbeiter ein Sicherheitsrisiko, das den zugangsbeschränkten Bereich betrifft, kann die Not-Aus-Taste betätigt werden, um (manuell) den Alarm auszulösen.

Vorzugsweise weist das Steuermodul eine Deaktivierungssteuerung, vorzugsweise einen Deaktivierungsknopf, zur Deaktivierung der Empfängereinheit und/oder der Emittereinheit auf. Der zugangsbeschränkte Bereich, der überwacht werden soll, kann beispielsweise teilweise durch eine Wand begrenzt sein. Daher kann es nicht notwendig oder sogar nicht sinnvoll sein, den gesamten Umfang des zugangsbeschränkten Bereichs zu überwachen, da die Mauer möglicherweise ohnehin nicht durchbrochen wird und/oder weil die Mauer einem Baubetrieb unterliegt. In solchen Fällen kann z. B. eine Emittereinheit und/oder eine Empfängereinheit des mobilen Sicherheitsständers nicht verwendet werden, d.h. nicht mit einer anderen Empfängereinheit bzw. Emittereinheit gepaart werden. Mit der Deaktivierungssteuerung kann insbesondere die jeweilige Emittereinheit und/oder Empfängereinheit deaktiviert werden. Dies erhöht zudem die Flexibilität des mobilen Sicherheitsständers und erleichtert die Einrichtung.

Die Deaktivierung einer Empfängereinheit (und/oder einer Emittereinheit) kann insbesondere vor der Initialisierung erfolgen. Die Empfängereinheit (und/oder die Emittereinheit) kann jedoch auch nach der Initialisierung, d. h. während der Überwachung, deaktiviert werden. In diesem Fall kann kein Verletzungssignal erzeugt werden, da die betreffende(n) Einheit(en) absichtlich, d. h. absichtlich und nicht aufgrund eines Fehlers oder einer Verletzung, deaktiviert wird/werden. Kommt es bei der Emittereinheit und/oder der Empfängereinheit zu einem unerwarteten und/oder unbeabsichtigten Ausfall, z. B. aufgrund einer Fehlfunktion eines Bauteils oder eines Stromausfalls, wird ein Störungssignal erzeugt. Wird die betreffende Einheit jedoch mit Hilfe der Deaktivierungssteuerung deaktiviert, kann kein Überschreitungssignal erzeugt werden. Die Daten können Informationen über die Deaktivierung enthalten. Zum Beispiel kann die Emittereinheit des ersten mobilen Sicherheitsständers durch die Deaktivierungssteuerung deaktiviert werden. Die Daten beinhalten Informationen über die Deaktivierung und können an das Kommunikationsmodul des zweiten mobilen Sicherheitsständers übermittelt werden. Die Empfängereinheit des zweiten mobilen Sicherheitsständers kann insbesondere mit der Emittereinheit des ersten mobilen Sicherheitsständers gekoppelt werden. Wenn die Emittereinheit des ersten mobilen Sicherheitsständers mittels der Deaktivierungssteuerung deaktiviert wird, kann das Kommunikationsmodul des zweiten mobilen Sicherheitsständers die Daten empfangen. Der zweite mobile Sicherheitsständer kann insbesondere so konfiguriert werden, dass er in diesem Fall kein Verletzungssignal erzeugt, da die Deaktivierung absichtlich erfolgt ist und keine unbeabsichtigte Verletzung stattgefunden hat. Insbesondere kann der zweite mobile Sicherheitsständer so konfiguriert sein, dass in diesem Fall ein von dem Verletzungssignal unterscheidbares Informationssignal erzeugt wird, um den Anwender über die Deaktivierung zu informieren.

Beim Bau eines Tunnels zum Beispiel kann eine Tunnelwand einen rechteckigen, zugangsbeschränkten Bereich abschließen. An der Tunnelwand können Bauarbeiten durchgeführt werden, z. B. können Löcher gebohrt und Befestigungselemente wie beispielsweise Anker in den Bohrlöchern installiert werden. Da die Wand des Tunnels einem Baubetrieb unterliegt, ist eine Lichtschranke an der Wand möglicherweise nicht sinnvoll. Daher kann die jeweilige Emittereinheit und/oder Empfängereinheit der mobilen Sicherheitsständer neben der Wand (absichtlich) deaktiviert werden.

Vorzugsweise ist die Empfängereinheit und/oder die Emittereinheit in Bezug auf das Trägergestell beweglich. Das Trägergestell kann zum Beispiel eine Profilschiene, insbesondere eine Aluminiumprofilschiene, aufweisen. Die Empfängereinheit und/oder die Emittereinheit kann insbesondere auf einem Träger angeordnet sein, wobei der Träger mit der Profilschiene in Eingriff steht, so dass die Empfängereinheit und/oder die Emittereinheit in Bezug auf die Profilschiene verschiebbar ist. Die Empfängereinheit und/oder die Emittereinheit können insbesondere entlang mindestens einer ersten Achse in mindestens vertikaler Richtung beweglich sein (bei bestimmungsgemäßer Verwendung des mobilen Sicherheitsständers). Optional kann die Empfängereinheit und/oder die Emittereinheit entlang einer zweiten Achse beweglich sein, wobei die zweite Achse quer, insbesondere orthogonal, zur ersten Achse verläuft. Die zweite Achse kann im Wesentlichen horizontal sein. Optional kann die Empfängereinheit und/oder die Emittereinheit entlang einer dritten Achse beweglich sein, wobei die dritte Achse quer, insbesondere orthogonal, zu der ersten und der zweiten Achse verläuft. Die dritte Achse kann im Wesentlichen horizontal sein.

Optional kann die Empfängereinheit und/oder die Emittereinheit an einer Kugelkopfhalterung befestigt werden. Kugelkopfbefestigungen bieten zwei Freiheitsgrade bei der Drehung und ermöglichen eine schnelle, einfache und zuverlässige Einstellung und Ausrichtung. Der Kugelkopf kann insbesondere auf dem Träger angeordnet sein. Insgesamt kann die Empfängereinheit und/oder die Emittereinheit mindestens einen, optional zwei und vorzugsweise drei, translatorische Freiheitsgrade in Bezug auf das Trägergestell sowie mindestens einen, vorzugsweise zwei, rotatorische Freiheitsgrade aufweisen. Diese Freiheitsgrade, vorzugsweise jeder Empfängereinheit und jeder Emittereinheit, erleichtern den Einsatz und die Ausrichtung des mobilen Sicherheitsständers in verschiedenen Situationen.

Vorzugsweise weist der mobile Sicherheitsständer eine Ausrichtungsunterstützung, insbesondere eine Wasserwaage auf. Die Ausrichtungsunterstützung kann eine Neigung des Trägergestells in Bezug auf eine Vertikale anzeigen. Darüber hinaus kann am Trägergestell, insbesondere an der Emittereinheit, eine Ausrichtungshilfe angeordnet sein. Bei der Ausrichtungshilfe kann es sich insbesondere um einen Führungslaser mit einer Wellenlänge im sichtbaren Bereich handeln, der zur Ausrichtung der Emittereinheit in Bezug auf eine Empfängereinheit verwendet werden kann. Die Ausrichtungshilfe kann insbesondere aus einem Fadenkreuz bestehen. Die Ausrichtungshilfe kann insbesondere abnehmbar an dem Trägergestell und/oder der Empfängereinheit und/oder der Emittereinheit befestigt werden. Die Ausrichtungshilfe kann z.B. mittels einer lösbaren Klickverbindung befestigt werden.

Optional weist der mobile Sicherheitsständer mindestens eine optische Anzeigeeinheit auf, die zur Anzeige eines Betriebszustandes konfiguriert ist.

Vorzugsweise kann der mobile Sicherheitsständer mindestens eine optische Anzeigeeinheit aufweisen, die zur Anzeige eines Betriebszustands konfiguriert ist. Der mobile Sicherheitsständer kann insbesondere eine optische Anzeigeeinheit zur Anzeige eines Betriebszustandes der Empfängereinheit aufweisen. Zusätzlich oder alternativ kann der mobile Sicherheitsständer eine optische Anzeigeeinheit zur Anzeige eines Betriebszustands der Emittereinheit aufweisen. Vorzugsweise weist der mobile Sicherheitsständer eine optische Anzeigeeinheit pro Emittereinheit und eine optische Anzeigeeinheit pro Empfängereinheit auf. Die optische Anzeigeeinheit kann beispielsweise Statussignale (ähnlich einer Ampel) aufweisen, die anzeigen, ob der zugangsbeschränkte Bereich gefahrlos betreten werden kann oder nicht. Die optische Anzeigeeinheit kann insbesondere so konfiguriert sein, dass sie anzeigt, ob die Emittereinheit aktiv ist oder nicht. So kann beispielsweise eine rot blinkende LED auf ein Sicherheitsrisiko hinweisen. Die optische Anzeigeeinheit kann insbesondere von außen gesteuert werden.

Die optische Anzeigeeinheit einer Empfängereinheit kann insbesondere so konfiguriert sein, dass sie anzeigt, ob die Empfängereinheit aktiv ist oder nicht. Die optische Anzeigeeinheit kann insbesondere so konfiguriert sein, dass sie anzeigt, ob die Empfängereinheit ein Signal von einer Emittereinheit empfängt oder nicht. Eine rot blinkende LED kann zum Beispiel ein Sicherheitsrisiko anzeigen. Die optische Anzeigeeinheit kann insbesondere von außen gesteuert werden.

Der mobile Sicherheitsständer kann insbesondere eine optische Anzeigeeinheit aufweisen, die so konfiguriert ist, dass sie einen Betriebszustand des gesamten mobilen Sicherheitsständers anzeigt. Die optische Anzeigeeinheit kann beispielsweise Statussignale (ähnlich einer Ampel) enthalten, die anzeigen, ob es sicher ist, den zugangsbeschränkten Bereich zu betreten oder nicht. So kann beispielsweise eine rot blinkende LED ein Sicherheitsrisiko anzeigen. Die optische Anzeigeeinheit kann insbesondere von außen gesteuert werden.

Das mobile Sicherheits-Lichtschranken-System weist einen ersten mobilen Sicherheitsständer und mindestens einen zweiten mobilen Sicherheitsständer auf, wobei der erste und der zweite mobilen Sicherheitsständer erfindungsgemäße mobile Sicherheitsständer sind, wobei die Emittereinheit des ersten mobilen Sicherheitsständers und die Empfängereinheit des zweiten mobilen Sicherheitsständers so ausgerichtet sind, dass die Empfängereinheit so konfiguriert ist, dass sie elektromagnetische Strahlung von der Emittereinheit empfängt, wobei die Emittereinheit und die Empfängereinheit eine mobile Sicherheits-Lichtschranke bilden.

Die Empfängereinheit des zweiten mobilen Sicherheitsständers (und ggf. weiterer mobilen Sicherheitsständer) ist so konfiguriert, dass sie elektromagnetische Strahlung von der jeweiligen Emittereinheit des ersten mobilen Sicherheitsständers empfängt. Ein von der Empfängereinheit detektiertes Signal (vorzugsweise in Abhängigkeit von der Zeit) zeigt eine Behinderung eines optischen Weges zwischen der Emittereinheit und der Empfängereinheit an. Um die zusammenwirkende(n) Emittereinheit(en) und Empfängereinheit(en) aufeinander ausrichten zu können, sind sowohl die Emittereinheit als auch die Empfängereinheit vorzugsweise in Bezug auf das Trägergestell schwenkbar. Beispielsweise können die Emittereinheit und/oder die Empfängereinheit in horizontaler Richtung und/oder in vertikaler Richtung schwenkbar sein. "Horizontal" und "vertikal" beziehen sich auf die Verwendungsrichtung des mobilen Sicherheitsständers. Die Schwenkbarkeit der Empfängereinheit und der Emittereinheit kann den Einsatz und die Ausrichtung der mobilen Sicherheits-Lichtschranke erleichtern und diese an verschiedene Situationen anpassen.

Um eine Lichtschranke zu bilden, reichen insbesondere mindestens zwei Ständer aus. Je nach Anwendung können drei oder mehr mobile Sicherheitsständer eingesetzt werden, um einen zugangsbeschränkten Bereich abzugrenzen.

Das Kommunikationsmodul des ersten mobilen Sicherheitsständers und das Kommunikationsmodul des zweiten mobilen Sicherheitsständers können insbesondere so konfiguriert sein, dass sie Daten miteinander austauschen. Insbesondere können die Kommunikationsmodule aller mobilen Sicherheitsständer des mobilen Sicherheits-Lichtschranken-Systems so konfiguriert sein, dass sie Daten austauschen. Das/die Kommunikationsmodul/e können insbesondere so konfiguriert sein, dass sie Bereitschaftssignale aussenden und empfangen, um anzuzeigen, dass der jeweilige mobile Sicherheitsständer aktiv ist.

Die Erfindung betrifft ferner ein mobiles Bausystem mit einem mobilen Bauroboter, das Folgendes aufweist:
- eine Roboterbasis mit einem Antriebssystem zum Bewegen des mobilen Bauroboters auf einer Fläche; und
- eine Datenempfangseinheit; und
- ein erfindungsgemäßes mobiles Sicherheits-Lichtschranken-System, wobei das Kommunikationsmodul des ersten mobilen Sicherheitsständers und das Kommunikationsmodul des zweiten mobilen Sicherheitsständers zum Übertragen von Daten an die Empfängereinheit ausgebildet sind.

Das mobile Bausystem weist einen mobilen Bauroboter und ein mobiles Sicherheits-Lichtschranken-System gemäß der Erfindung auf. Der mobile Bauroboter weist eine Roboterbasis mit einem Antriebssystem zum Bewegen des mobilen Bauroboters auf einer Fläche und eine Empfängereinheit für die Daten auf. Das Kommunikationsmodul des mobilen Sicherheitsständers ist zur Übermittlung der Daten an die Empfängereinheit des mobilen Bauroboters ausgebildet. Der mobile Bauroboter ist im bestimmungsgemäßen Gebrauch in einem zugangsbeschränkten Bereich angeordnet. Das mobile Sicherheits-Lichtschranken-System kann insbesondere zur Überwachung des zugangsbeschränkten Bereichs ausgebildet sein.

Wenn die Datenempfangseinheit des mobilen Bauroboters ein Verletzungssignal (als Teil der übertragenen Daten) empfängt, kann der mobile Bauroboter insbesondere so konfiguriert werden, dass er einen Betrieb und/oder eine Bewegung stoppt und/oder einschränkt. Um den regulären Betrieb wieder aufzunehmen, kann ein Bediener beispielsweise sicherstellen, dass der zugangsbeschränkte Bereich sicher ist, und die Aktivierungssteuerung aller mobilen Sicherheitsständer betätigen, um einen sicheren Ausgangszustand für die (wieder aufgenommene) Überwachung zu bestätigen.

Beispielsweise können die Kommunikationsmodule der mobilen Sicherheitsständer (d. h. zumindest der erste und der zweite mobile Sicherheitsständer) so konfiguriert sein, dass sie ein Standby-Signal an die Datenempfangseinheit des mobilen Bauroboters senden. Das Bereitschaftssignal kann insbesondere anzeigen, dass der mobile Sicherheitsständer aktiv und die Lichtschranke z. B. nicht durchbrochen ist. Wenn das Bereitschaftssignal unterbrochen wird, beispielsweise aufgrund eines Stromausfalls des ersten mobilen Sicherheitsständers, kann der mobile Bauroboter so konfiguriert sein, dass er einen Betrieb stoppt und/oder einschränkt. Der mobile Bauroboter kann insbesondere so konfiguriert sein, dass er ein Bereitschaftssignal von den Kommunikationsmodulen der mobilen Sicherheitsständer anfordert.

Optional weist mindestens ein mobiler Sicherheitsständer ein Tachymeter auf, wobei der mobile Bauroboter einen optischen Robotermarker aufweist, wobei der weitere Ständer einen weiteren optischen Marker aufweist, wobei das Tachymeter zur Verfolgung des weiteren optischen Markers und des optischen Robotermarkers und zur Bestimmung einer Position des optischen Robotermarkers relativ zu dem mobilen Sicherheits-Lichtschranken-System konfiguriert ist.

Die genaue Bestimmung des Standorts des mobilen Bauroboters auf der Baustelle ist aus mehreren Gründen entscheidend. Präzision ist bei Bauprojekten entscheidend. Es muss sichergestellt werden, dass sich z. B. Bohrungen genau an der vorgesehenen Stelle befinden, um Fehler und kostspielige Verzögerungen zu vermeiden. Darüber hinaus kann die exakte Positionierung der Bohrungen zu einer erhöhten Sicherheit auf der Baustelle beitragen. Die genaue Positionierung von Befestigungselementen wie beispielsweise Ankern kann dazu beitragen, Kollisionen mit anderen Ausrüstungen oder Bauwerken zu vermeiden und auch Verletzungen der Arbeiter zu verhindern. Schließlich ist die Kenntnis der genauen Position der Bohrungen auch für Dokumentationszwecke erforderlich, da sie eine klare Aufzeichnung der durchgeführten Arbeiten und des Projektfortschritts ermöglichen. Daher sind in diesem Zusammenhang sowohl Effizienz als auch Präzision entscheidend. Die Verfolgung kann insbesondere mit einem Tachymeter erfolgen. Die Aufnahme des Tachymeters in den mobilen Sicherheitsständer ist besonders vorteilhaft, da nur ein einziger Ständer benötigt wird, um sowohl ein Tachymeter als auch einen der Ständer einer Lichtschranke einzusetzen. Außerdem ist der mobile Sicherheitsständer für die Überwachung des mobilen Bauroboters ausgelegt und sollte daher an einer Position mit einem ausreichenden Sichtfeld platziert werden. Auch das Tachymeter sollte so platziert werden, dass eine ungehinderte Sichtlinie zum mobilen Bauroboter besteht, vorzugsweise im gesamten Baubereich oder zugangsbeschränkten Bereich.

Das Tachymeter kann insbesondere so konfiguriert sein, dass es die optische Markierung automatisch verfolgt. Die Verfolgung weist die Messung eines Abstands zwischen dem Tachymeter und der optischen Markierung sowie die Messung eines Polarwinkels und eines Azimutwinkels einer Sichtlinie zwischen dem Tachymeter und der optischen Markierung in Bezug auf ein Referenzkoordinatensystem auf. Die optische Markierung kann entweder in einer stationären Position oder alternativ in Bewegung verfolgt werden. Das Tachymeter kann eine Quelle für elektromagnetische Strahlung, insbesondere für sichtbares Licht, enthalten. Das Tachymeter kann zum Beispiel eine LED oder einen Laser aufweisen. Die optische Markierung kann z. B. ein Reflektor oder ein Prisma sein. Bei der optischen Markierung kann es sich insbesondere um ein rein passives Element handeln. Die optische Markierung kann zumindest einen Teil der vom Tachymeter ausgesandten und auf die optische Markierung einfallenden elektromagnetischen Strahlung zum Tachymeter reflektieren. Die Position des Tachymeters kann insbesondere verwendet werden, um ein globales Referenzkoordinatensystem innerhalb der Baustelle zu definieren. Die Position des Tachymeters in Bezug auf das Gelände, z. B. die Baustelle, kann bekannt sein. Die Position des Tachymeters kann z. B. während oder nach dem Aufstellen des Tachymeters (d. h. des mobilen Sicherheitsständers mit dem Tachymeter) festgelegt und gemessen werden.

Der mobile Sicherheitsständer kann insbesondere einen Prozessor aufweisen, der so konfiguriert ist, dass er eine Position des mobilen Bauroboters auf der Grundlage der Messung des Tachymeters, d. h. der Verfolgung der optischen Markierung(en) des mobilen Bauroboters, bestimmt. Der Prozessor kann sich innerhalb des Tachymeters befinden. Das Tachymeter kann insbesondere Rotationssensoren aufweisen.

Der Prozessor kann insbesondere Zugang zu einem computerlesbaren Medium haben, z. B. einem elektronischen Speicher. Auf dem computerlesbaren Medium kann eine elektronische Kopie eines Plans des Standorts gespeichert sein, wobei der Plan die Positionen angeben kann, an denen der mobile Roboter eine Aufgabe ausführen sollte. Der Prozessor kann insbesondere so konfiguriert sein, dass er die Bewegung des mobilen Roboters entsprechend steuert.

Das Tachymeter kann insbesondere so konfiguriert sein, dass es Verfolgungsdaten liefert, also Daten über die Position bspw. der optischen Markierung(en). Die Daten können ein Verfolgungsdatum aufweisen. Der mobile Bauroboter kann insbesondere relativ zu einem Baukoordinatensystem geortet werden. Anhand der Ortungsdaten kann eine Position des mobilen Bauroboters relativ zum mobilen Sicherheits-Lichtschranken-System berechnet werden. Anhand der Verfolgungsdaten kann beispielsweise überprüft werden, ob sich der mobile Bauroboter bestimmungsgemäß im zugangsbeschränkten Bereich befindet oder nicht.

Darüber hinaus kann der mobile Sicherheitsständer insbesondere so konfiguriert sein, dass er z. B. mittels drahtloser Ortung, Ultrabreitband-Ortung (UWB) oder optischer Ortung geortet werden kann. Der mobile Sicherheitsständer kann z. B. einen Wi-Fi-Tag und/oder einen UWB-Tag aufweisen. Der mobile Sicherheitsständer kann insbesondere eine optische Markierung aufweisen, die für die Verfolgung mit einem Tachymeter konfiguriert ist.

Verfahren zur Initialisierung einer mobilen Sicherheits-Lichtschranke mit einem mobilen Sicherheits-Lichtschranken-System gemäß der Erfindung mit den Schritten:
- Aufstellen des ersten mobilen Sicherheitsständers und des mindestens zweiten mobilen Sicherheitsständers, vorzugsweise auf einer Baustelle;
- Ausrichten der Emittereinheit des ersten mobilen Sicherheitsständers und der Empfängereinheit des zweiten mobilen Sicherheitsständers, so dass die Empfängereinheit so konfiguriert ist, dass sie elektromagnetische Strahlung von der Emittereinheit empfängt;
- Aktivieren der Überwachung des mobilen Sicherheits-Lichtschranken-Systems durch Bestätigen eines anfänglichen sicheren Zustands unter Verwendung der Aktivierungssteuerung des ersten mobilen Sicherheitsständers und unter Verwendung der Aktivierungssteuerung des zweiten mobilen Sicherheitsständers.

Die Benutzung kann z.B. durch Drücken des Aktivierungsknopfes erfolgen. Die Benutzung erfolgt vor Ort am jeweiligen mobilen Sicherheitsständer. Vorzugsweise kann die Aktivierungssteuerung nicht aus der Ferne gesteuert werden.

Der "sichere Ausgangszustand" bezieht sich auf den zugangsbeschränkten Bereich. Der Begriff "Anfangszustand" kann sich zum Beispiel auf die Initialisierung der mobilen Sicherheits-Lichtschranke beziehen. Der Ausgangszustand kann als sicher angesehen werden, wenn sich beispielsweise kein Personal im zugangsbeschränkten Bereich befindet. Je nach Anwendung kann der Ausgangszustand als sicher gelten, wenn sich keine (unerwünschten) Objekte oder Personen im zugangsbeschränkten Bereich befinden. Der sichere Ausgangszustand kann von einem Bediener durch Betätigung der Aktivierungssteuerung jedes mobilen Sicherheitsständers des mobilen Sicherheits-Lichtschranken-Systems beurteilt und bestätigt werden.

Vorzugsweise ist die Sichtlinie zwischen der Emittereinheit und der Empfängereinheit ungehindert.

Vorzugsweise weist das Verfahren den folgenden Schritt auf:
- Koppeln der Emittereinheit des ersten mobilen Sicherheitsständers mit der Empfängereinheit des zweiten mobilen Sicherheitsständers mittels der Kopplungssteuerung des ersten mobilen Sicherheitsständers.

Optional kann das mobile Sicherheits-Lichtschranken-System einen dritten mobilen Sicherheitsständer aufweisen. Das mobile Sicherheits-Lichtschranken-System kann insbesondere aus vier oder mehr mobilen Sicherheitsständern bestehen.

Optional weist der erste mobile Sicherheitsständer eine Deaktivierungssteuerung zur Deaktivierung der Empfängereinheit mit dem folgenden Schritt auf:
- Deaktivieren der Empfängereinheit des ersten mobilen Sicherheitsständers mit Hilfe der Deaktivierungssteuerung.

Die Deaktivierung kann vor der Aktivierung der Überwachung erfolgen. Alternativ kann die Deaktivierung nach der Aktivierung der Überwachung (d. h. während der Überwachung) erfolgen, wobei die (absichtliche) Deaktivierung einer Empfängereinheit und/oder einer Emittereinheit vorzugsweise kein Verletzungssignal auslöst.

Die Erfindung betrifft ferner ein Verfahren zum Betrieb des erfindungsgemäßen mobilen Bausystems, mit den Schritten:
- Bereitstellen des mobilen Bauroboters in einem Baubereich auf einer Baustelle;
- Initialisieren einer mobilen Sicherheits-Lichtschranke gemäß dem erfindungsgemäßen Verfahren zum Initialisieren einer mobilen Sicherheits-Lichtschranke, wobei das mobile Sicherheits-Lichtschranken-System den Baubereich von einem Sicherheitsbereich trennt;
- Erzeugen eines Durchbruchsignals durch das mobile Sicherheits-Lichtschranken-System, wobei das Durchbruchsignal durch eine Unterbrechung der empfangenen elektromagnetischen Strahlung an der Empfängereinheit des zweiten (oder weiteren) mobilen Sicherheitsständers ausgelöst wird, wobei die Daten das Durchbruchsignal aufweisen;
- Übertragen der Daten an die Datenempfangseinheit des mobilen Bauroboters mittels des Kommunikationsmoduls des zweiten (oder weiteren) mobilen Sicherheitsständers.

Das Überschreitungssignal kann insbesondere von dem mobilen Sicherheitsständer erzeugt werden, der die Empfängereinheit aufweist, die die Überschreitung erkennt. Insbesondere können Lichtvorhänge, die aus (gepaarten) Emittereinheiten und Empfängereinheiten bestehen, den Baubereich vom Sicherheitsbereich trennen.

Zumindest das Steuermodul des ersten mobilen Sicherheitsständers weist einen Not-Aus-Knopf zum Auslösen eines Alarms auf, wobei die Daten den Alarm aufweisen, wenn der Not-Aus-Knopf aktiviert ist.

Optional weist der mobile Bauroboter eine Robotersteuerungseinheit zur Steuerung des mobilen Bauroboters, mit den folgenden Schritten auf:
- Empfangen der Daten durch die Robotersteuereinheit;
- Einschränken und/oder Anhalten eines Betriebs und/oder einer Bewegung des mobilen Bauroboters in Reaktion auf den Empfang von Daten, die das Überschreitungssignal und/oder den Alarm aufweisen.

Der mobile Bauroboter kann zum Beispiel so konfiguriert sein, dass er Ziegelsteine verlegt, Wände oder Decken streicht, Löcher bohrt und/oder Befestigungselemente wie beispielsweise Anker oder Dübel anbringt. Die Robotersteuerungseinheit kann so konfiguriert sein, dass sie den mobilen Bauroboter anhält, wenn sie ein Verletzungssignal erhält. Alternativ kann die Robotersteuerungseinheit so konfiguriert sein, dass sie den Betrieb des mobilen Bauroboters einschränkt. Zum Beispiel kann der mobile Bauroboter einen aktuellen Schritt, wie das Bohren eines Lochs, beenden und nach Beendigung dieses Schritts anhalten.

Zur Veranschaulichung wird die Offenbarung anhand einiger ausgewählter Ausführungsformen, die in den Zeichnungen dargestellt sind, näher erläutert. Diese Ausführungsformen sind jedoch nicht als einschränkend für die Offenbarung zu betrachten.
- Fig. 1: zeigt schematisch eine perspektivische Ansicht eines mobilen Sicherheitsständers;
- Fig. 2: zeigt schematisch eine weitere perspektivische Ansicht des mobilen Sicherheitsständers von Fig. 1;
- Fig. 3: zeigt schematisch die Draufsicht auf ein mobiles Bausystem mit einem mobilen Bauroboter, einer Datenempfangseinheit und einem mobilen Sicherheits-Lichtschranken-System; und
- Fig. 4: zeigt schematisch eine perspektivische Ansicht des mobilen Bausystems aus Fig. 3.

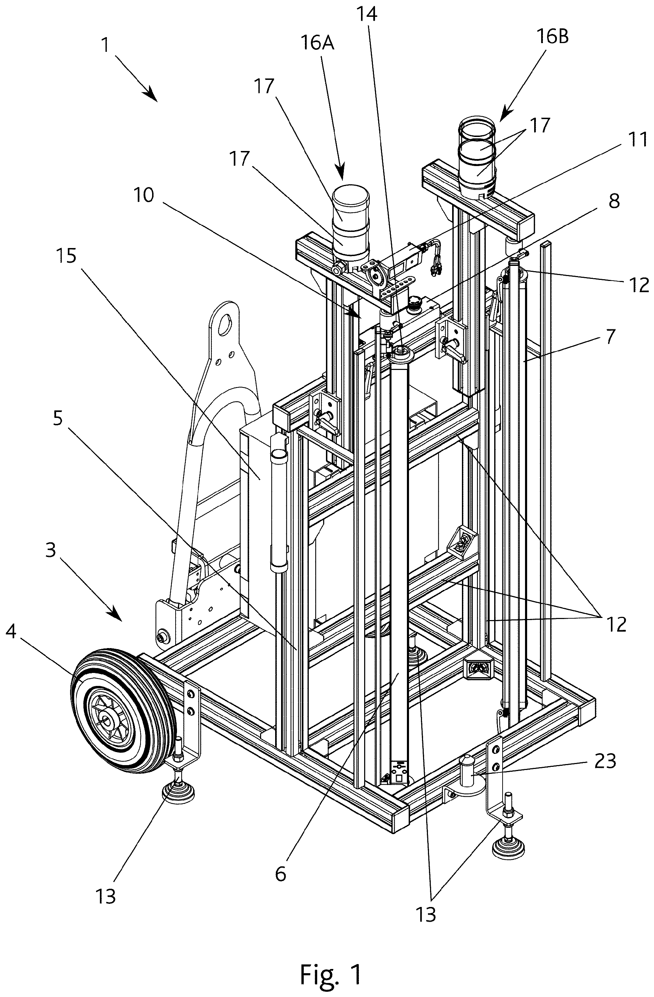

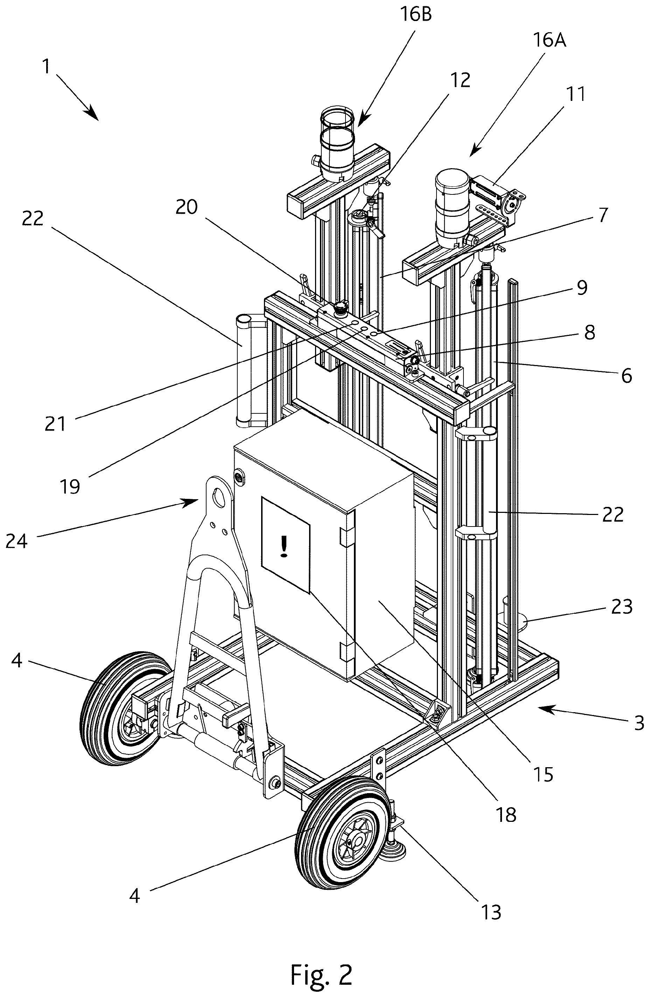

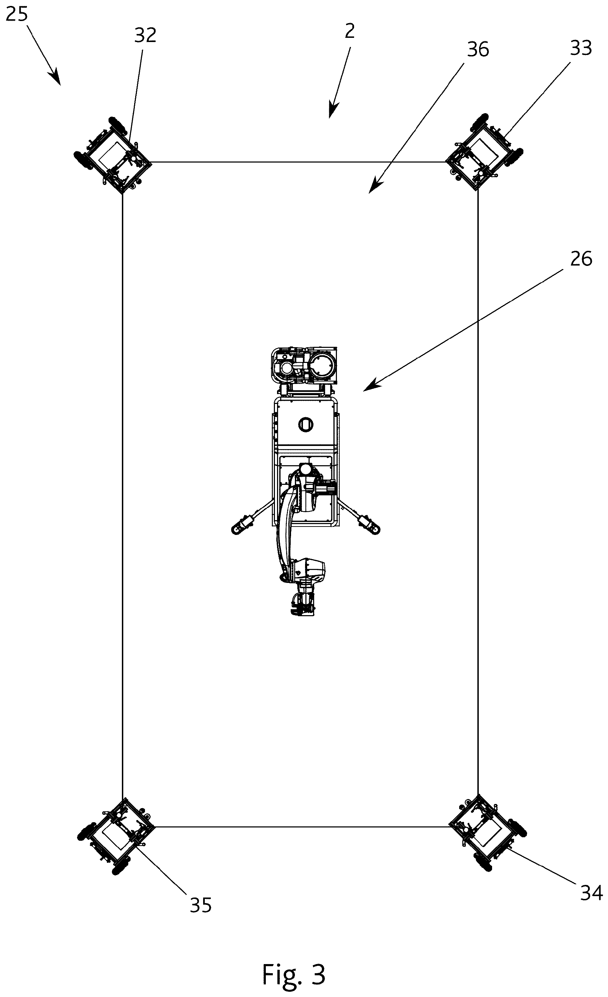

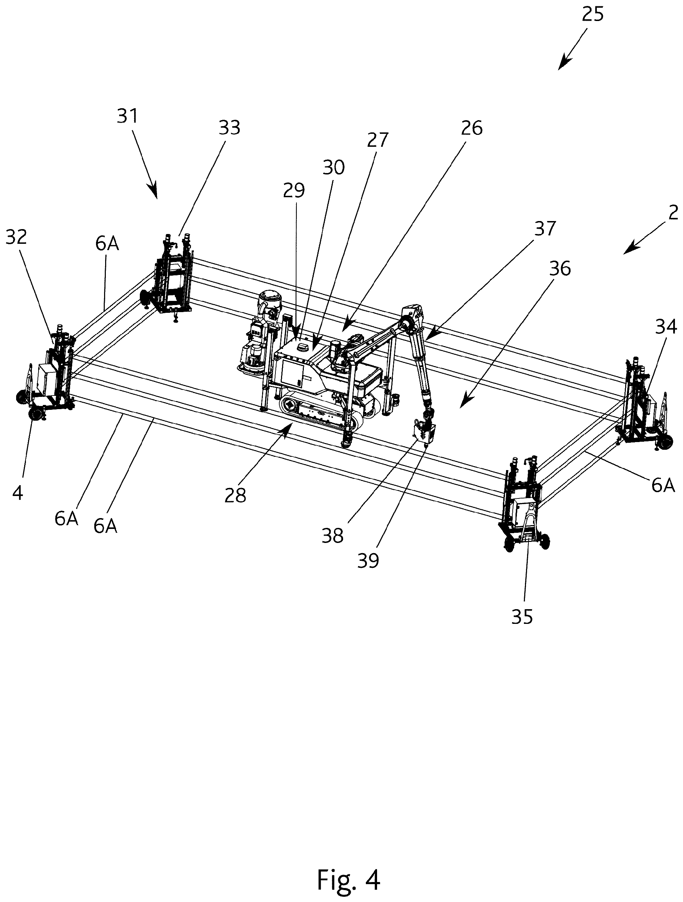

Figur 1 und Figur 2 zeigen perspektivische Ansichten eines mobilen Sicherheitsständers 1 für eine mobile Sicherheits-Lichtschranke 2 (siehe Figuren 3 und 4), bestehend aus:
- einer Basis 3 mit mindestens einem Rad 4 zum Bewegen des mobilen Sicherheitsständers 1 auf einer Fläche;
- einem Trägergestell 5, das an der Basis 3 befestigt ist;
- einer Emittereinheit 6, die zum Aussenden elektromagnetischer Strahlung konfiguriert ist (siehe horizontale Linien 6A in Figur 4), wobei die Emittereinheit 6 auf dem Trägergestell 5 angeordnet ist, wobei die Emittereinheit 6 in dieser beispielhaften Ausführungsform in Bezug auf das Trägergestell 5 schwenkbar ist; und
- einer Empfängereinheit 7, die zum Empfangen von elektromagnetischer Strahlung konfiguriert ist, wobei die Empfängereinheit 7 an dem Trägergestell 5 angeordnet ist, wobei die Empfängereinheit 7 in dieser beispielhaften Ausführungsform in Bezug auf das Trägergestell 5 schwenkbar ist;
- einem Steuermodul 8 zur Steuerung des mobilen Sicherheitsständers 1 mit einer Aktivierungssteuerung 9, die in diesem Beispiel einen Aktivierungsknopf aufweist, zur Aktivierung einer Überwachung des mobilen Sicherheitsständers 1; und
- einem Kommunikationsmodul 10, das zum Empfangen von Daten vom Steuermodul 8 und zum Übertragen der Daten konfiguriert ist. Das Kommunikationsmodul 10 ist in dieser Ausführungsform Teil des Steuermoduls 8.

Die Aktivierungssteuerung 9 darf von einem Bediener erst dann betätigt werden, wenn er sich vergewissert hat, dass ein zugangsbeschränkter Bereich 36 sicher ist und sich keine Personen oder unerwünschte Objekte in dem zu überwachenden zugangsbeschränkten Bereich 36 aufhalten.

Der mobile Sicherheitsständer 1 weist ferner einen optischen Abbildungs- und/oder Näherungssensor 11 auf, in diesem Beispiel eine auf dem Trägergestell 5 angeordnete Kamera, wobei der optische Abbildungs- und/oder Näherungssensor 11 gegenüber dem Trägergestell 5 schwenkbar ist.

Das Trägergestell 5 besteht aus einem Tragwerk mit Stützstangen 12. Die Stützstangen 12 bestehen aus Aluminium, das sowohl leicht als auch steif ist.

Sowohl die Empfängereinheit 7 als auch die Emittereinheit 6 sind in Bezug auf das Trägergestell 5 beweglich. Insbesondere kann eine vertikale Position der Empfängereinheit 7 und der Emittereinheit 6 eingestellt werden.

Der mobile Sicherheitsständer 1 weist drei Stützelemente 13 zur Abstützung des mobilen Sicherheitsständers 1 auf einer Fläche auf. Die Stützelemente 13 sind ausziehbar.

Eine Ausrichtungsunterstützung 14, in diesem Fall eine Wasserwaage, ist vorgesehen. In diesem Ausführungsbeispiel sind sowohl an der Emittereinheit 6 als auch an der Empfängereinheit 7 zwei Ausrichtungsunterstützungen 14 vorgesehen.

**In** einem Gehäuse 15 befindet sich eine Batterie (nicht dargestellt), die für die Bereitstellung von elektrischer Energie ausgelegt ist.

Der mobile Sicherheitsständer 1 weist mindestens eine, in diesem Beispiel zwei, optische Anzeigeeinheiten 16A und 16B auf, die zur Anzeige eines Betriebszustandes konfiguriert sind.

Die optische Anzeigeeinheit 16A ist so konfiguriert, dass sie einen Betriebszustand der Empfängereinheit 7 anzeigt. Die optische Anzeigeeinheit 16B ist für die Anzeige eines Betriebszustands der Emittereinheit 6 konfiguriert. Die optischen Anzeigeeinheiten 16A und 16B weisen Statussignale 17 (ähnlich einer Ampel) auf, die anzeigen, ob die Empfängereinheit 7 ein Signal empfängt oder nicht, bzw. ob die Emittereinheit 6 aktiv ist oder nicht. Die Statussignale 17 zeigen außerdem an, ob die Emittereinheit 6 oder die Empfängereinheit 7 mit einer anderen Empfängereinheit 7 bzw. Emittereinheit 6 gepaart ist.

Am Gehäuse 15 ist ein Warnhinweis 18 lösbar befestigt. Das Gehäuse 15 ist lösbar mit dem Trägergestell 5 verbunden. Der Warnhinweis 18 ist somit lösbar an dem Trägergestell 5 befestigt.

Das Steuermodul 8 weist eine Kopplungssteuerung 19 auf, die in diesem Beispiel einen Kopplungsknopf aufweist, um die Emittereinheit 6 mit einer Empfängereinheit 7 eines anderen mobilen Sicherheitsständers 1 zu verbinden (siehe Abbildungen 3 und 4). Das Steuermodul 8 ist so konfiguriert, dass es die Emittereinheit 6 als Reaktion auf eine Betätigung der Kopplungssteuerung 19 (durch einen Bediener) ausschaltet, eine vordefinierte Zeitspanne abwartet und sie dann wieder einschaltet. Die Daten weisen eine Angabe darüber auf, wann die Kopplungssteuerung 19 betätigt wurde.

Das Steuermodul 8 weist eine Not-Aus-Taste 20 zur Auslösung eines Alarms auf, wobei die Daten den Alarm beinhalten. Die Not-Aus-Taste 20 kann von einem Bediener im Falle eines Sicherheitsproblems und/oder eines Notfalls betätigt werden.

Das Steuermodul 8 weist darüber hinaus eine Deaktivierungssteuerung 21 auf, in diesem Beispiel einen Deaktivierungsknopf, zur Deaktivierung der Empfängereinheit 7 und/oder der Emittereinheit 6.

Wie in Figur 2 dargestellt, weist der mobile Sicherheitsständer 1 zwei Griffe 22 zum Halten oder Aufnehmen des mobilen Sicherheitsständers 1 auf. Darüber hinaus weist der mobile Sicherheitsständer 1 eine Anhängerkupplung 23 und eine Kupplung 24 auf. Die Anhängerkupplung 23 des mobilen Sicherheitsständers 1 ist so ausgebildet, dass sie mit der Kupplung 24 eines anderen mobilen Sicherheitsständers 1 in Eingriff gebracht werden kann, so dass mehrere mobile Sicherheitsständer 1 gleichzeitig bewegt oder geschleppt werden können. Die Kupplung 24 ist in Bezug auf die Basis 3 schwenkbar, so dass die Kupplung 24 nach dem Transport des mobilen Sicherheitsständers 1 in einer (aufrechten) Position gelagert werden kann.

Die Figuren 3 und 4 zeigen ein mobiles Bausystem 25 mit einem mobilen Bauroboter 26. Der mobile Bauroboter 26 weist eine Roboterbasis 27 mit einem Antriebssystem 28 zum Bewegen des mobilen Bauroboters 26 auf einer Fläche und eine Datenempfangseinheit 29 (angeordnet in einem Robotergehäuse 30) auf. Das mobiles Bausystem 25 weist ferner ein mobiles Sicherheits-Lichtschranken-System 31 auf, wobei das Kommunikationsmodul 10 eines ersten mobilen Sicherheitsständers 32 und das Kommunikationsmodul 10 eines zweiten mobilen Sicherheitsständers 33 zur Übertragung von Daten an die Datenempfangseinheit 29 ausgebildet sind.

Das mobile Sicherheits-Lichtschranken-System 31 weist einen ersten mobilen Sicherheitsständer 32 und einen zweiten mobilen Sicherheitsständer 33 auf, wobei es sich bei dem ersten und dem zweiten mobilen Sicherheitsständer 32, 33 um mobile Sicherheits-Lichtschranken 2 (wie in den Figuren 1 und 2 dargestellt) handelt. Die Emittereinheit 6 des ersten mobilen Sicherheitsständers 32 und die Empfängereinheit 7 des zweiten mobilen Sicherheitsständers 33 sind so ausgerichtet, dass die Empfängereinheit 7 so konfiguriert ist, dass sie elektromagnetische Strahlung von der Emittereinheit 6 empfängt. Die Emittereinheit 6 und die Empfängereinheit 7 bilden einen Teil des mobilen Sicherheits-Lichtschranken-Systems 31. In dieser beispielhaften Ausführungsform weist das mobile Sicherheits-Lichtschranken-System 31 darüber hinaus einen dritten mobilen Sicherheitsständer 34 und einen vierten mobilen Sicherheitsständer 35 auf. Die gleichartig ausgebildeten mobilen Sicherheitsständer 1 (d.h. der erste, der zweite, der dritte und der vierte mobile Sicherheitsständer 32-35) sind in diesem Beispiel in einem Rechteck angeordnet und dienen zur Überwachung des Umfangs eines rechteckigen zugangsbeschränkten Bereichs 36 mit Hilfe des mobilen Sicherheits-Lichtschranken-Systems 31, die durch entsprechend ausgerichtete und gepaarte Emittereinheiten 6 und Empfängereinheiten 7 gebildet wird.

Die Kommunikationsmodule 10 der mobilen Sicherheitsständer 1 sind so konfiguriert, dass sie miteinander kommunizieren können, insbesondere um das Pairing zu ermöglichen.

Wird die mobile Sicherheits-Lichtschranke 2 z. B. von einem Bauarbeiter durchbrochen, der den zugangsbeschränkten Bereich 36 betritt, wird das Signal der jeweiligen Empfängereinheit 7 unterbrochen. Das jeweilige Kommunikationsmodul 10 (des jeweiligen mobilen Sicherheitsständers 1, der die Empfängereinheit 7 mit dem unterbrochenen Signal aufweist) sendet ein Durchbruchsignal an den mobilen Bauroboter 26. Der mobile Bauroboter 26 ist so konfiguriert, dass er seinen Betrieb nach Erhalt des Verletzungssignals einstellt.

**In** diesem Beispiel weist der mobile Bauroboter 26 einen Roboterarm 37 mit einem Endeffektor 38 auf. Der Endeffektor 38 weist einen Bohrer 39 auf. Der mobile Bauroboter 26 ist hier so konfiguriert, dass er auf der Baustelle innerhalb des zugangsbeschränkten Bereichs 36 Löcher bohrt.

Ein Verfahren zur Initialisierung der mobilen Sicherheits-Lichtschranke 2 mit einem mobilen Sicherheits-Lichtschranken-System 31 weist die folgenden Schritte auf:
- Aufstellen des ersten mobilen Sicherheitsständers 32 und des zweiten mobilen Sicherheitsständers 33, in dieser beispielhaften Ausführungsform auf einer Baustelle;
- Ausrichten der Emittereinheit 6 des ersten mobilen Sicherheitsständers 32 und der Empfängereinheit 7 des zweiten mobilen Sicherheitsständers 33, so dass die Empfängereinheit 7 so konfiguriert ist, dass sie elektromagnetische Strahlung von der Emittereinheit 6 empfängt;
- Aktivieren der Überwachung des mobilen Sicherheits-Lichtschranken-Systems 31 durch Bestätigen eines anfänglichen sicheren Zustands unter Verwendung der Aktivierungssteuerung 9 des ersten mobilen Sicherheitsständers 32 und unter Verwendung der Aktivierungssteuerung 9 des zweiten mobilen Sicherheitsständers 33.

**In** dieser beispielhaften Ausführungsform ist der mobile Bauroboter 26 so konfiguriert, dass er erst nach der Initialisierung der mobilen Sicherheits-Lichtschranke 2, d.h. nach der Aktivierung der Überwachung durch Betätigung der Aktivierungssteuerung 9 aller beteiligten mobilen Sicherheitsständer 1 (d.h. des ersten 32, des zweiten 33, des dritten 34 und des vierten mobilen Sicherheitsständers 35) mit der Arbeit und Bewegung beginnt.

In diesem Beispiel weist das Verfahren den folgenden Schritt vor dem Aktivieren auf:
- Koppeln der Emittereinheit 6 des ersten mobilen Sicherheitsständers 32 mit der Empfängereinheit 7 des zweiten mobilen Sicherheitsständers 33 mittels der Kopplungssteuerung 19 des ersten mobilen Sicherheitsständers 32.

Die Kommunikationsmodule 10 des ersten und des zweiten mobilen Sicherheitsständers 32, 33 sind so konfiguriert, dass sie Daten austauschen. Die Daten weisen eine Angabe auf, wann die Kopplungssteuerung 19 betätigt wird. In diesem Beispiel wird bei Betätigung der Kopplungssteuerung 19 des ersten mobilen Sicherheitsständers 32 die Emittereinheit 6 (des ersten mobilen Sicherheitsständers 32) ausgeschaltet. Die Empfängereinheit 7 des zweiten mobilen Sicherheitsständers 33, die auf die Emittereinheit 6 des ersten mobilen Sicherheitsständers 32 ausgerichtet ist, empfängt keine elektromagnetische Strahlung von der Emittereinheit 6, da diese ausgeschaltet ist. Nach einer vordefinierten Zeit, in diesem Beispiel eine Sekunde, wird die Emittereinheit 6 des ersten mobilen Sicherheitsständers 32 wieder eingeschaltet, so dass die Empfängereinheit 7 des zweiten mobilen Sicherheitsständers 33 wieder elektromagnetische Strahlung von der Emittereinheit 6 des ersten mobilen Sicherheitsständers 32 empfängt. Das Kommunikationsmodul 10 des ersten mobilen Sicherheitsständers 32 überträgt Daten, die einen Zeitstempel der Betätigung der Kopplungssteuerung 19 aufweisen, an den zweiten mobilen Sicherheitsständer 33. Der zweite mobile Sicherheitsständer 33 ist so konfiguriert, dass er den empfangenen Zeitstempel mit einem erkannten Signal der Empfängereinheit 7 vergleicht. Stimmt das Signal der Empfängereinheit 7 mit dem Zeitstempel überein, bestätigt das Steuermodul 8 des zweiten mobilen Sicherheitsständers 33, dass die Emittereinheit 6 des ersten mobilen Sicherheitsständers 32 und die Empfängereinheit 7 des zweiten mobilen Sicherheitsständers 33 gepaart sind und eine mobile Sicherheits-Lichtschranke 2 bilden. Die Positionen des ersten und des zweiten mobilen Sicherheitsständers 32, 33 sind bekannt. Daher ist eine Position, Ausrichtung und/oder Abmessung der mobilen Sicherheits-Lichtschranke 2 aufgrund der bekannten Paarung bekannt.

Der erste mobile Sicherheitsständer 32 weist eine Deaktivierungssteuerung 21 zur Deaktivierung der Empfängereinheit 7 auf. Optional weist das Verfahren den folgenden Schritt (z.B. vor oder nach dem Aktivieren der Überwachung) auf:
- Deaktivieren der Empfängereinheit 7 des ersten mobilen Sicherheitsständers 32 mittels der Deaktivierungssteuerung 21.

Dies kann z. B. geschehen, wenn der erste mobile Sicherheitsständer 32 und der zweite mobile Sicherheitsständer 33 neben einer Wand stehen, die den zugangsbeschränkten Bereich 36 abgrenzt, so dass dieser Teil des Umfangs des zugangsbeschränkten Bereichs 36 nicht überwacht werden muss. Alternativ kann dies von einem Bediener durchgeführt werden, um die mobile Sicherheits-Lichtschranke 2 absichtlich zu umgehen, zum Beispiel für einen kurzen Zeitraum und während der menschlichen Überwachung, so dass der mobile Bauroboter 26 eine Aufgabe ausführen kann, die andernfalls ein Überschreitungssignal auslösen könnte, zum Beispiel eine Bohraufgabe in unmittelbarer Nähe der mobilen Sicherheits-Lichtschranke 2.

Ein Verfahren zum Betrieb des mobilen Bausystems 25 weist die folgenden Schritte auf:
- Bereitstellen des mobilen Bauroboters 26 in einem zugangsbeschränkten Bereich 36 auf einer Baustelle (in diesem Beispiel ist der zugangsbeschränkte Bereich 36 der Baubereich);
- Initialisieren eines mobilen Sicherheits-Lichtschranken-Systems 31 gemäß dem Verfahren zum Initialisieren eines mobilen Sicherheits-Lichtschranken-Systems 31, wobei das mobile Sicherheits-Lichtschranken-System 31 den Baubereich von einem Sicherheitsbereich trennt (der Sicherheitsbereich ist in diesem Beispiel ein beliebiger Bereich außerhalb des zugangsbeschränkten Bereichs 36);
- Erzeugen eines Durchbruchsignals durch das mobile Sicherheits-Lichtschranken-System 31, wobei das Durchbruchsignal durch eine Unterbrechung der empfangenen elektromagnetischen Strahlung an der Empfängereinheit 7 des zweiten mobilen Sicherheitsständers 33 ausgelöst wird, wobei die Daten das Durchbruchsignal aufweisen;
- Übertragen der Daten an die Datenempfangseinheit 29 des mobilen Bauroboters 26 mittels des Kommunikationsmoduls 10 des zweiten mobilen Sicherheitsständers 33.

In dieser Ausführungsform weist der mobile Bauroboter 26 eine Robotersteuerung (nicht dargestellt; angeordnet im Robotergehäuse 30) zur Steuerung des mobilen Bauroboters 26 auf. Das Verfahren zum Betrieb des mobilen Bausystems 25 weist die weiteren Schritte auf:
- Empfangen der Daten durch die Robotersteuereinheit;
- Einschränken und/oder Anhalten eines Betriebs und/oder einer Bewegung des mobilen Bauroboters 26 als Reaktion auf den Empfang von Daten, die das Verletzungssignal und/oder den Alarm aufweisen.

### Bezugszeichenliste

- 1: mobiler Sicherheitsständer
- 2: mobile Sicherheits-Lichtschranke
- 3: Basis
- 4: Rad
- 5: Trägergestell
- 6: Emittereinheit
- 6A: horizontale Linien
- 7: Empfängereinheit
- 8: Steuermodul
- 9: Aktivierungssteuerung
- 10: Kommunikationsmodul
- 11: optischer Abbildungs- und/oder Näherungssensor
- 12: Stützstangen
- 13: Stützelemente
- 14: Ausrichtungsunterstützung
- 15: Gehäuse
- 16A: Anzeigeeinheit der Empfängereinheit 7
- 16B: Anzeigeeinheit der Emittereinheit 6
- 17: Statussignale
- 18: Warnhinweis
- 19: Kopplungssteuerung
- 20: Not-Aus-Taste
- 21: Deaktivierungssteuerung
- 22: Griff
- 23: Anhängerkupplung
- 24: Kupplung
- 25: mobiles Bausystem
- 26: mobiler Bauroboter
- 27: Roboterbasis
- 28: Antriebssystem
- 29: Datenempfangseinheit
- 30: Robotergehäuse
- 31: mobiles Sicherheits-Lichtschranken-System
- 32: erster mobiler Sicherheitsständer
- 33: zweiter mobiler Sicherheitsständer
- 34: dritter mobiler Sicherheitsständer
- 35: vierter mobiler Sicherheitsständer
- 36: zugangsbeschränkter Bereich
- 37: Roboterarm
- 38: Endeffektor
- 39: Bohrer

## Patentansprüche

1. Mobiler Sicherheitsständer (1) für eine mobile Sicherheits-Lichtschranke (2), aufweisend:
- eine Basis (3) mit mindestens einem Rad (4) zum Bewegen des mobilen Sicherheitsständers (1) auf einer Fläche;
- ein Trägergestell (5), das an der Basis (3) befestigt ist;
- eine Emittereinheit (6), insbesondere mit einem Laserstrahler, die zum Aussenden von elektromagnetischer Strahlung ausgebildet ist, wobei die Emittereinheit (6) an dem Trägergestell (5) angeordnet ist, wobei die Emittereinheit (6) vorzugsweise gegenüber dem Trägergestell (5) schwenkbar ist; und/oder
- eine Empfängereinheit (7), die zum Empfangen elektromagnetischer Strahlung konfiguriert ist, wobei die Empfängereinheit (7) an dem Trägergestell (5) angeordnet ist, wobei die Empfängereinheit (7) vorzugsweise in Bezug auf das Trägergestell (5) schwenkbar ist;
- ein Steuermodul (8) zur Steuerung des mobilen Sicherheitsständers (1) mit einer Aktivierungssteuerung (9), vorzugsweise mit einem Aktivierungsknopf, zur Aktivierung einer Überwachung durch den mobilen Sicherheitsständer (1); und
- ein Kommunikationsmodul (10), das zum Empfangen von Daten vom Steuermodul (8) und zum Übertragen der Daten eingerichtet ist.

2. Mobiler Sicherheitsständer (1) nach Anspruch 1, **dadurch gekennzeichnet, dass** das Steuermodul (8) eine Kopplungssteuerung (19), vorzugsweise einen Kopplungsknopf, zum Verbinden der Emittereinheit (6) mit einer Empfängereinheit eines anderen mobilen Sicherheitsständers (1) aufweist.

3. Mobiler Sicherheitsständer (1) nach Anspruch 1 oder Anspruch 2, **dadurch gekennzeichnet, dass** das Steuermodul (8) eine Not-Aus-Taste (20) zum Auslösen eines Alarms aufweist, wobei die Daten den Alarm beinhalten.

4. Mobiler Sicherheitsständer (1) nach einem der Ansprüche 1 bis 3, **dadurch gekennzeichnet, dass** das Steuermodul (8) eine Deaktivierungssteuerung (21), vorzugsweise einen Deaktivierungsknopf, zur Deaktivierung der Empfängereinheit (6) und/oder der Emittereinheit (7) aufweist.

5. Mobiler Sicherheitsständer (1) nach einem der Ansprüche 1 bis 4, **dadurch gekennzeichnet, dass** die Empfängereinheit (7) und/oder die Emittereinheit (6) gegenüber dem Trägergestell (5) beweglich ist/sind.

6. Mobiler Sicherheitsständer (1) nach einem der Ansprüche 1 bis 5, **dadurch gekennzeichnet, dass** dass der mobile Sicherheitsständer (1) eine Ausrichtungsunterstützung (14) aufweist, insbesondere eine Wasserwaage.

7. Mobiler Sicherheitsständer (1) nach einem der Ansprüche 1 bis 6, **dadurch gekennzeichnet, dass** der mobile Sicherheitsständer (1) mindestens eine optische Anzeigeeinheit (16A, 16B) aufweist, die zur Anzeige eines Betriebszustandes ausgebildet ist.

8. Mobiles Sicherheits-Lichtschranken-System (31) aufweisend mindestens einen ersten mobilen Sicherheitsständer (32) und einen zweiten mobilen Sicherheitsständer (33), wobei der erste und der zweite mobile Sicherheitsständer (32, 33) mobile Sicherheitsständer (1) nach einem der Ansprüche 1 bis 7 sind, wobei die Emittereinheit (6) des ersten mobilen Sicherheitsständers (32) und die Empfängereinheit (7) des zweiten mobilen Sicherheitsständers (33) so ausgerichtet sind, dass die Empfängereinheit (7) so konfiguriert ist, dass sie elektromagnetische Strahlung von der Emittereinheit (6) empfängt, wobei die Emittereinheit (6) und die Empfängereinheit (7) eine mobile Sicherheits-Lichtschranke (2) bilden.

9. Mobiles Bausystem (25) mit einem mobilen Bauroboter (26), aufweisend:
- eine Roboterbasis (27) mit einem Antriebssystem (28) zum Bewegen des mobilen Bauroboters (26) auf einer Fläche; und
- eine Datenempfangseinheit (29);
**gekennzeichnet durch:**
ein mobiles Sicherheits-Lichtschranken-System (31) nach Anspruch 8, wobei das Kommunikationsmodul (10) des ersten mobilen Sicherheitsständers (32) und das Kommunikationsmodul (10) des zweiten mobilen Sicherheitsständers (33) zur Übertragung von Daten an die Datenempfangseinheit (29) konfiguriert sind.

10. Verfahren zur Initialisierung einer mobilen Sicherheits-Lichtschranke (2) mit einem mobilen Sicherheits-Lichtschranken-System (31) gemäß Anspruch 8 mit den Schritten:
- Platzieren des ersten mobilen Sicherheitsständers (32) und des mindestens zweiten mobilen Sicherheitsständers (33), vorzugsweise auf einer Baustelle;
- Ausrichten der Emittereinheit (6) des ersten mobilen Sicherheitsständers (32) und der Empfängereinheit (7) des zweiten mobilen Sicherheitsständers (33), so dass die Empfängereinheit (7) so eingerichtet ist, dass sie elektromagnetische Strahlung von der Emittereinheit (6) empfängt;
- Aktivieren der Überwachung des mobilen Sicherheits-Lichtschranken-Systems (31) durch Bestätigen eines anfänglichen sicheren Zustands unter Verwendung der Aktivierungssteuerung (9) des ersten mobilen Sicherheitsständers (33) und unter Verwendung der Aktivierungssteuerung (9) des zweiten mobilen Sicherheitsständers (33).

11. Verfahren nach Anspruch 10 aufweisend einen weiteren Schritt vor dem Aktivieren:
- Koppeln der Emittereinheit (6) des ersten mobilen Sicherheitsständers (32) mit der Empfängereinheit (7) des zweiten mobilen Sicherheitsständers (33) mittels einer Kopplungssteuerung (19) des ersten mobilen Sicherheitsständers (32).

12. Verfahren nach Anspruch 10 oder Anspruch 11, wobei der erste mobile Sicherheitsständer (32) eine Deaktivierungssteuerung (21) zum Deaktivieren der Empfängereinheit (7) mit dem folgenden Schritt aufweist:
- Deaktivieren der Empfängereinheit (7) des ersten mobilen Sicherheitsständers (32) mittels der Deaktivierungssteuerung (21).

13. Verfahren zum Betreiben des mobilen Bausystems (25) nach Anspruch 9, mit den Schritten:
- Bereitstellen des mobilen Bauroboters (26) in einem Baubereich auf einer Baustelle;
- Initialisieren einer mobilen Sicherheits-Lichtschranke (2) gemäß dem Verfahren nach einem der Ansprüche 10 bis 12, wobei das mobile Sicherheits-Lichtschranken-System (31) den Baubereich von einem Sicherheitsbereich trennt;
- Erzeugen eines Durchbruchsignals durch das mobile Sicherheits-Lichtschranken-System (31), wobei das Durchbruchsignal durch eine Unterbrechung der empfangenen elektromagnetischen Strahlung an der Empfängereinheit (7) des zweiten mobilen Sicherheitsständers (33) ausgelöst wird, wobei die Daten das Durchbruchsignal aufweisen;
- Übertragen der Daten an die Datenempfangseinheit (29) des mobilen Bauroboters (26) mittels des Kommunikationsmoduls (10) des zweiten mobilen Sicherheitsständers (33).

14. Verfahren nach Anspruch 13, wobei zumindest das Steuermodul (8) des ersten mobilen Sicherheitsständers (32) eine Not-Aus-Taste (20) zum Auslösen eines Alarms aufweist, wobei die Daten den Alarm beinhalten, wenn die Not-Aus-Taste (20) aktiviert ist.

15. Verfahren nach Anspruch 13 oder Anspruch 14, wobei der mobile Bauroboter (26) eine Robotersteuereinheit zur Steuerung des mobilen Bauroboters (26) aufweist, aufweisend die weiteren Schritte:
- Empfangen der Daten durch die Robotersteuereinheit;
- Einschränken und/oder Anhalten eines Betriebs und/oder einer Bewegung des mobilen Bauroboters (26) in Reaktion auf den Empfang von Daten, die das Verletzungssignal und/oder den Alarm aufweisen.
